(19) Europäisches Patentamt
European Patent Office
Office européen des brevets

(11) EP 0 798 070 B2

(12) **NEW EUROPEAN PATENT SPECIFICATION**

(45) Date of publication and mention of the opposition decision:
**14.06.2006 Bulletin 2006/24**

(45) Mention of the grant of the patent:
**26.07.2000 Bulletin 2000/30**

(21) Application number: **97105268.3**

(22) Date of filing: **27.03.1997**

(51) Int Cl.:
***B23K 35/368*** *(2006.01)*

(54) **Flux cored wire electrode for arc welding**

Drahtelektrode mit Flussmittelkern zum Lichtbogenschweissen

Fil électrode à âme de flux pour soudage à l'àrc

(84) Designated Contracting States:
**BE DE DK ES FI FR GB NL SE**

(30) Priority: **28.03.1996 JP 7502496**

(43) Date of publication of application:
**01.10.1997 Bulletin 1997/40**

(73) Proprietor: **KABUSHIKI KAISHA KOBE SEIKO SHO**
**also known as Kobe Steel Ltd.**
**Kobe 651 (JP)**

(72) Inventors:
- **Konishi, Masato,**
  **Fujisawa plant in Kobe Steel Ltd.**
  **Fujisawa-shi,**
  **Kanagawa, 251 (JP)**
- **Hosoi, Koichi,**
  **Fujisawa plant in Kobe Steel Ltd.**
  **Fujisawa-shi,**
  **Kanagawa, 251 (JP)**

(74) Representative: **TBK-Patent**
**Bavariaring 4-6**
**80336 München (DE)**

(56) References cited:

| | |
|---|---|
| **JP-A- 1 284 497** | **JP-A- 3 275 295** |
| **JP-A- 56 095 495** | **JP-A- 63 013 695** |
| **US-A- 3 848 109** | **US-A- 4 282 420** |
| **US-A- 4 465 921** | **US-A- 4 719 330** |

- **PATENT ABSTRACTS OF JAPAN vol. 007, no. 041 (M-194), 18 February 1983 & JP 57 190798 A (KOBE SEIKOSHO KK), 24 November 1982,**

EP 0 798 070 B2

## Description

BACKGROUND OF THE INVENTION

The present invention relates to a flux cored wire electrode filled with a titanium flux, for gas-shield arc welding; more specifically, the present invention relates to a flux cored wire electrode for arc welding, having good welding workability for all position welding, particularly for vertical position welding and overhead position welding and excellent low-temperature toughness at a temperature zone down to about -40°C, which is frequently required for ship welding materials.

Rationalization and higher efficiency have been demanded in recent years toward welding process. For meeting these demands, all position flux cored wire electrodes have been developed to replace conventional arc welding rods, whereby the efficiency of welding process has been Improved significantly.

For even such type of flux cored wire electrodes, however, a relatively low welding electric current for vertical welding and overhead welding should be selected. From the respect of higher efficiency, these wire electrodes have not yet been satisfactory. JP-A-57-190798 and JP-A-B-099192 (published on 16.4.96) by the present inventors have been achieved so as to overcome such prior-art drawbacks, and describe novel techniques with no occurrence of dropping of molten metals or slug or ho occurrence of poor bead shape in a higher welding current zone.

According to these prior-art applications, however, higher levels of oxides such as.$TiO_2$ as a slug generating agent are contained in the wire electrodes and the slug pH is acidic so as to attain excellent welding workability and efficiency for all position welding. Therefore, the oxide content in the weld metal is above 700 ppm. Therefore, the prior-art techniques are not.appropriate from the respect of toughness, because these techniques cannot be applied practically to parts requiring toughness down to about -40 °C in the ship industry.

Further, it is referred to US 4,465,921 which claims a flux-cored welding electrode for gas-shielded arc welding comprising a mild steel sheath and a flux core, said flux core comprising, based on the total weight of the electrode:

$TiO_2$—4 to 8.5%
Mg—0.2 to 0.8%
Ti—0.03 to 0.7%
B—0.002 to 0.025%
Mn—1.0 to 3.0%
Si—0.1 to 1.2%
Metal Fluorides—0.01 to 0.30% as F-content
Oxides—not more than 8.5%, including $TiO_2$. Further for the stabilization of arc, an oxide or a carbonate of an alkali metal such as R, Na or Li, a compound of a rare earth element such as Ce and Ln or iron powder may be contained in the filler flux. Generally used as the metal fluoride are the fluorides of the alkali metals and alkali earth metals, including Na, K, Li, Mg, Ca and the like.

In order to overcome these problems, the present invention has been achieved. It is an object the present invention to provide a flux cored wire electrode for arc welding, being capable of carrying out highly efficient welding process at all positions, particularly for vertical welding and overhead welding, and having excellent toughness down to a temperature of about -40 °C.

Summary of the Invention

The flux cored wire electrode for arc welding in accordance with the present invention comprises a flux filled in the steel housing, wherein the contents of $TiO_2$, T.Ti, T.Mg, T.Al, T.B, T.Mn, T.Si, T.K, and T.Na are at least 3.0 to 10.0 % by weight, 2 to B % by weight, 0,1 to 0.8 % by weight, not more than 0.5 % by weight, 0.001 to 0.03 % by weight, 1.0 to 4.0 % by weight, 0.5 to 3.0 % by weight, 0.001 to 0.5 % by weight and 0.001 to 0.5 % by weight, respectively, to the total weight of the wire. Furthermore, T.Mg, T.B, T.Ti, T.Mn, T.K, T.Na, and T.Si, contained in the wire electrode satisfy the formula (I).

$$1.0 \leqq (T.Mg + 100 \times T.B + 0.1 \times T.Ti + 0.1 \times T.Mn + T.K + T.Na) / T.Si \leqq 3.0 \qquad (I)$$

Here, 'T' preceding each element norme means "total". Namely, "T element" means total element included in the corresponding metal, alloy and compounds.

Preferably, the whole water content should be defined within a range of 20 to 1,000 ppm (measured at 750 °C in $O_2$ atmosphere by KF method) as the ratio to the total wire electrode weight

In order to suppress the dropping of molten metals at vertical and overhead positions, the present inventors have made investigations about effective means for the following phenomena: (1) the increase of the viscosity of high-temperature slug and (2) the increase of the viscosity of molten metals. Simultaneously, the inventors have examined a factor with a certain effect of improving toughness, among the results of such examinations(3). Consequently, the inventors have found that the component series described in the claims effectively satisfy what are described above in (1) to (3).

In order to increase the viscosity of slug at high temperatures, the inventors have examined the amount of $TiO_2$ to be added, which may possibly generate slug with higher melting points. Furthermore, the amounts of T.Mn, T. Si, T.Al, T.Ti, and T.Mg to be added, all having close relation with the principal slug components, $TiO_2$, $Al_2O_3$, MgO, MnO, $SiO_2$ and the like, have been examined as well. Additionally, the contents of T.K and T.Na with a remarkable action to stabilize arc have been examined, taking accounts of the use at vertical and overhead positions where arc is more unstable to readily increase sputter generation, compared with the use at other welding positions.

In order to concurrently procure welding workability and low-temperature toughness together, it has been found on the basis of the outcome of these experiments that the control of the component range of the composition elements, defined by the formula (I), is required to be within a certain range. More specifically, if the Xvafue represented by the formula 2 is below 0.5, the low-temperature toughness and arc stability are deteriorated; and if the X value is above 5.0, the dropping and arc stability at vertical and overhead positions cannot satisfy the predefined objective levels. The X value should be 1.0 to 3.0 as claimed.

$$X = (T.Mg + 100 \times T.B + 0.1 \times T.Ti + 0.1 \times T.Mn + T.K + T.Na)/T.Si \qquad (II)$$

The reason why the gas-shield arc welding flux cored wire electrode of the present invention should satisfy the defined essential requirements will now be described below. Using flux cored wire electrodes with different compositions, the present inventors have examined the performance thereof at welding tests in various manners. At first, the conditions of the welding test are described below.

Subjective wire electrodes are as follows; the wire electrode diameter is 1.2 mm; the cross-sectional shape is as shown in Fig.1 (a); and the flux ratio is 15 %. Using the wire electrodes of the following compositions shown in Tables, the welding test has been carried out.

①Assessment test of welding workability

Polarity; DCEP
Welding current; 180 to 300 A
Welding voltage; appropriate
Subjective steel plate; JIS G3106 SM490A; thickness of 20 mm; T-type fillet
Welding posture; vertical and overhead positions
Shield gas; 100 % $CO_2$, flow of 25 liters/min.

②Charpy Impact Test (deposited metal) according to JIS Z 3111

Polarity; DCEP
Welding current; 280 A
Welding voltage; appropriate
Subjective steel plate; JIS G3106 SM490A
Shield gas; 100 % $CO_2$, flow of 25 liters/min
Others; welding according to JIS Z 3313.

The results of the assessment test of the welding workability and Charpy impact test of the weld metals are shown in Figs. 2 to 4. Fig.2 is a graph depicting the relation between the T.Mg level on the axis of abscissa and the Charpy absorption energy on the axis of ordinate; Fig.3 is a graph depicting the relation between the T.Si level on the axis of abscissa and the Charpy absorption energy on the axis of ordinate; and Fig.4 is a graph depicting the relation between the X value of the formula 2 and the Charpy absorption energy on the axis of ordinate.

As shown in Fig.2, T.Mg suppresses the dropping of the weld metals and concurrently works to distinctively decrease the oxygen level in the weld metals. Thus, the welding workability at all positions, particularly vertical and overhead positions, is remarkably improved Toughness is also improved dramatically.

As shown in Fig.3, furthermore, addition of an appropriate amount of T.Si has a significant effect of improving the dropping and arc stability of the weld metals.

As shown in Fig.4, still furthermore, the X value of the formula 2 is a factor with marked effects on procuring the workability and arc stability at all positions and good low-temperature toughness.

Additionally, it is found that the flux cored wire electrodes within the component range found in a series of experiments have got improved welding workability with higher efficiency at all positions (particularly, dropping at vertical and overhead positions and arc stability) and excellent toughness.

The reasons why the components of the flux cored wire electrodes achieved on the basis of the aforementioned experimental results in accordance with the present invention should be added and why the compositions thereof should be limited are described below.

As explained above, "T" preceding each element name means "total". Namely, "T element" means total element included in the corresponding metal, alloy, and compounds.

$TiO_2$; 3.0 to 10.0 % by weight

$TiO_2$ is the principalflux component intitanium-series flux cored wire electrodes and is an essential component as the slug generation agent and arc stabilizing agent Therefore, $TiO_2$ should be contained at 3.0 to 10.0 %by weight as the ratio to the total wire electrode weight $TiO_2$ has a property as a slug generating agent, having excellent slug coating property and peelability which have never been observed in other slug generating agents, as well as a property as an arc stabilizing agent If $TiO_2$ is below 3.0 % by weight, no excellent bead appearance or bead shape can be procured. Additionally, sputter is Increased in such case. $TiO_2$ serves to effectively prevent the occurrence of bead dropping at vertical and overhead positions. If $TiO_2$ is above 10.0 % by weight, alternatively, the slug generation and slug viscosity are so excess that slug contamination occurs, involving the decrease of welding workability.

As $TiO_2$ sources, use may be made of natural titanium or oxides such as industrial titanium oxide (including synthetic rutile), rutile, reduced ilumenite, rucoxine, ilumenite and potassium titanate.

T.Ti; 2 to 8 % by weight

Addition of an appropriate amount of T.Ti makes good bead appearance and shape, which promotes deacidification in weld metals. Furthermore, a part of Ti remaining in the deposited metals makes the crystal particles finer together with B, to effectively improve toughness. So as to procure these effects, T.Ti should be added at 2 % by weight or more. If T.Ti is above 8 % by weight, however, the remaining level of the T.Ti is so excess in the weld metal that the resulting strength is increased at a more than necessary level. Thus, T.Ti should be at 2 to B % by weight.

Still further, Ti sources may be added in the forms of the aforementioned $TiO_2$ sources in addition to Ti alloy such as Fe-Ti and metal Ti.

Herein; the level of T.T means the level of Ti contained in metal Ti, Ti alloy, and Ti compounds.

Each Ti source has a differentlevel of contribution as TTi. Furthermore, the analytical method of T.Ti comprises solubilizing a flux cored wire electrode in acid and then melting the electrode in alkali for plasma emission spectroscopic analysis (name of analysis; ICP emission spectroscopy).

TMg; 0.1 to 0.8 % by weight

The oxygen content in the weld metal decreases as the T.Mg content increases; if the T.Mg content is 0.1 % by weight or more, the oxygen content in the weld metal can be suppressed to about 600 ppm or less, which improves low-temperature toughness: By increasing the T.Mg content at the level or more, the impact value sifts to a higher level, while the fracture-appearance transition temperature sifts onto the side of low temperature. More specifically, the oxygen content in the weld metal can be suppressed to a lower level if Mg is contained at 0.1 % by weight or more, with the resultant decrease of the fracture-appearance transition temperature in the weld metal and the increase of the impact value. If the T. Mg content is too much, however, MgO with a higher melting point is increased in slug, with the resultant flow decrease, which deteriorates the slug coating performance and increases the generation of sputter and fume, leading to the deterioration of the workability. Thus, T. Mg should be suppressed to a level of 0.8 % by weight or less.

As Mg sources, use may be made of Mg alloy such as Al-Mg, Si-Mg, Si-Ca-Mg, Ca-Mg, and Ni-Mg and Mg compounds such as magnesia, in addition to metal Mg. The reaction of these Mg sources is more relatively mild than that of metal Mg, so that sputter level can be decreased.

Furthermore, T.Mg is analyzed by solubilizing a flux cored wire electrode in acid such as hydrochloric acid and melting then the electrode in alkali for plasma emission spectroscopic analysis (name of analysis; ICP emission spectroscopy).

T.Al; 0.5 % by weight or less

If T.Al is contained in a flux cored wire electrode at 0.5 % by weight or more, the bead shape is deteriorated, which causes deterioration of toughness with no damage on the balance of slug alkalinity. Thus, Al should be at 0.5 % by weight or less. Furthermore, Al is frequently contained in the forms of alloy such as Fe-Al and Al-Mg, metal Al, and compounds such as $Al_2O_3$ in such wire electrodes.
T.Al is further analyzed by solubilizing a flux cored wire electrode in acid such as hydrochloric acid and melting then the electrode in alkali for plasma emission spectroscopic analysis (name of analysis; ICP emission spectroscopy).
Because $Al_2O_3$ has an action to increase the slug freezing point to improve the workability at vertical and overhead positions, $Al_2O_3$ is contained at a relatively high level in flux cored wire electrodes for vertical position. In accordance with the present invention, however, so as to procure the workability at vertical position and concurrently retain toughness, the $Al_2O_3$ content is preferably less than that by conventional processes; if $Al_2O_3$ is above 0.1 % by weight, the bead form is likely to be deteriorated. More preferably, the content is 0.1 % by weight or less.

T.B; 0.001 to 0.03% by weight

By the addition of T.B at 0.001% by weight or more, excellent effects of improving notching toughness can be exerted. If the content is above 0.03 % by weight, however, the effect of improving toughness is markedly deteriorated while the tension resistance is so large due to hardening to readily develop crack. Furthermore, B may be added in the form of alloy such as Fe-B and Fe-SI-B; additionally, B may be added as compounds such as boron oxide. Boron oxide is reduced into B during welding, and B also exerts the same functions, If B is added In the form of boron oxide, boron oxide should be added within the aforementioned range on a boron basis.
T.B should be analyzed by solubilizing flux cored wire electrodes in acid such as hydrochloric acid arid melting the electrodes in alkali for emission spectroscopic analysis in plasma (name of analysis; ICP emission spectroscopy).

T.Mn; 1.0 to 4.0 % by weight

The addition of an appropriate amount of T.Mn can improve the appearance and shape of bead and welding workability, and can concurrently promote the deacidification of weld metals, while a part thereof remains in deposited metals to improve hardening to make the unaffected zone of the crystal part finer thereby improving the toughness and increasing the strength. So as to procure these effects, T.Mn should be added at 1.0 % by weight or more. If T.Mn is added at 4.0 % by weight or more, however, the remaining T.Mn in the deposited metal is so excess that the strength is elevated at a level higher than necessary, which readily generates crack.
A source for Mn supply includes metal Mn, Fe-Si-Mn and Mn compounds such as MnO.
T.Mn should be analyzed by solubilizing flux cored wire electrodes in acid such as hydrochloric acid and melting the electrodes in alkali for plasma emission spectroscopic analysis (name of analysis; ICP emission spectroscopy).

T.Si; 0.5 to 3.0 % by weight

T.Si improves the appearance and shape of bead, thereby maintaining good welding workability and concurrently promoting the deacidification of deposited metals. Additionally, T.Si remains in deposited metals to effectively increase the strength. These effects are effectively exerted at the addition thereof at 0.5 % by weight or more. The present inventors have found that T.Mg and T.Si have far better effects than other elements. However, if T.Si is above 3.0% by weight, the remaining T.81 level an the deposited metals is so high that the crystal particle gets so crude to decrease notching toughness. Thus, TSI should be at 0.5 to 3.0% by weight, Preferably 0.7 to 3.0 % by weight.
As T.Si sources in the flux, use may be made of Fe-Si, Si-Mn, quartz sand, various silicate compounds and the like.
$SiO_2$ has actions as a slug generating agent and an arc stabilizer, but if the $SiO_2$ amount is above 3.0 % by weight, slug peelability is distinctively deteriorated. Thus, $SiO_2$ should be within 0.5 to 3.0 % by weight
T.Si should be analyzed by solubilizing flux cored wire electrodes in acid such as hydrochloric acid and melting the electrodes in alkali for plasma emission spectroscopic analysis (name of analysis; ICP emission spectroscopy).

T.Na, T.K; 0:001 to 0.5 % by weight

T.Na and T.K are both necessarily added at 0.001 % by weight or more to the e total weight of the wire electrode, so as to elevate the arc stability at all positions. If either one thereof is added, the effect is decreased by half. Because these elements are added in the forms of fluoride, carbonate or oxide, the content thereof at 0.5 % by weight or more acts to decrease slug viscosity to readily generate slug dropping.

1.0 ≦ (T.Mg + 100 x T.B + 0.1 x T.Ti + 0.1 x T.Mn + T.K + T.Na)/ T.Si ≦ 3.0

In accordance with the present invention, importantly, workability at vertical and overhead positions should be improved than that by conventional all position flux cored wire electrodes, and the toughness should be improved. Therefore, it has been found that excellent toughness, and workability and arc stability at vertical and overhead positions can be procured if the value is set within a range of 1.0 to 3.0 from the respect of vertical and overhead dropping, arc stability and toughness. Furthermore, more preferable range is 1.0 to 2.0.

Whole water content: 20 to 1.000 ppm (measured at 750 °C in $O_2$ atmosphere by KF method)

According to the research works by the present inventors and the like, the upper limit of the wire water content at the state of a final product containing a surface lubricating agent should be 1,000 ppm if measured in oxygen atmosphere at 750 °C by Karl-Fisher electrodeposhion (KF) method according to JIS K0113-1979. If the content is above the limit, water is decomposed so that oxygen is contained at a higher level in weld metals, which works to decrease the viscosity of the weld metals to significantly enlarge the dropping at vertical arid overhead positions. Gas defects in the weld metals and cracking due to the level of highly disperse hydrogen readily occur. If the water content is below 20 ppm, however, the arc stability during welding is deteriorated to deteriorate welding workability. Thus, the water content in the flux cored wire electrodes should be 20 to 1,000 ppm, if measured at 750 °C in $O_2$ atmosphere by KF method More preferable range is 50 to 500 ppm.

If necessary, a variety of alloy components may be added satisfactorily. For example, addition of an appropriate amount of Ni has an effect of enhancing the hardening of weld metals. However, the remaining Ni in the weld metals is so excess if the Ni content is above 0.5 % that the strength is enhanced at a level more than necessary, to increase distinctively the frequency of crack generation. Furthermore, Ni may be added in the form of alloy in addition to the form of metal Ni.

The aforementioned titanium flux is prepared into a flux cored wire electrode by filling the flux in the soft steel housing according to routine methods, and as such soft steel housing, use may be made of cold rolling materials and hot rolling materials with good deep drawing performance from the respect of filling performance. The flux filling ratio is with no specific limitation, but most preferably, the ratio is within a range of 10 to 30 % to the total weight of the wire electrode.

The cross-sectional shape of wire electrodes is with no specific limitation, and for example, wire electrodes of a variety of shapes as shown in Fig.1 (a), (b), (c) and (d) may be used as well. The surface of a wire electrode of the shape (d) may satisfactorily be plated with Al, Cu and the like, with the plating deposition being suitable at 0.05 to 0.35 %. The wire electrode diameter may appropriately be determined, depending on the use thereof.

As the shield gas for use, oxidizing, neutral or reducing gases may be selected. As general shield gas, use may be made of $CO_2$ gas and a mixture gas of two or more selected from Ar, $CO_2$, $O_2$, He or the like.

Brief Description of the Drawings

Fig.1 is a view depicting the cross-sectional shape of a wire electrode.,;
Fig.2 is a graph depicting the relation between T.Mg content and Charpy absorption energy;
Fig.3 is a graph depicting the relation between T.Si content and Charpy absorption energy; and
Fig.4 is a graph depicting the relation between the numerical figure X in the formula 2 and Charpy absorption energy.

Description of the Preferred Embodiments

The present invention will now be described in Examples, in comparison with Comparative Examples. The following Table 1 shows the compositions of the fluxes.

Table 1

| No. | $TiO_2$ | T·Ti | T·Mg | T·Al | T·B | T·Mn | T·Si | T·K | T·Na |
|---|---|---|---|---|---|---|---|---|---|
| Inventive Examples | | | | | | | | | |
| 1 | 6.2 | 3.B | 0.47 | D.06 | 0.0070 | 2.2 | 1.1 | 0.060 | 0.030 |
| 2* | 3.1 | 29 | 0.10 | 0.02 | 0.0010 0 | 2.5 | 1.0 | 0.050 | 0.030 |
| 3 | 9.0 | 5.4 | 0.23 | 0.40 | 0.250 | 3.0 | 1.5 | 0.040 | 0.040 |
| 4 | 4.0 | 2.4 | 0.50 | 0.30 | 0.0100 | 3.5 | 1.3 | 0.050 | 0.002 |
| 5 | 4.5 | 3.0 | 0.50 | 0.10 0 | 0.0080 | 4.0 | 0.9 | 0.080 | 0.003 |
| 6 | 5.0 | 4.0 | 0.60 | 0.05 | 0.0070 | 1.0 | 1.2 | 0.050 | 0.004 |
| 7 | 5.5 | 3.3 | 0.40 | 0.05 | 0.0060 | 2.0 | 1.3 | 0.070 | 0.030 |
| 8* | 6.0 | 3.7 | 0.45 | 0.06 | 0.0060 | 3.0 | 2.0 | 0.040 | 0.050 |
| 9* | 6.3 | 3.8 | 0.34 | 0.02 | 0.0050 | 2.5 | 2.7 | 0.060 | 0.050 |
| 10 | 6.2 | 4.0 | 0.10 | 0.10 | 0.0040 | 2.4 | 1.1 | 0.080 | 0.030 |
| 11 | 7.2 | 4.6 | 0.60 | 0.04 | 0.0060 | 2.3 | 1.2 | 0.050 | 0.040 |
| 12 | 7.1 | 4.5 | 0.64 | 0.40 | 0.0100 | 2.5 | 1.3 | 0.040 | 0.020 |
| 13 | 8.0 | 5.1 | 0.45 | 0.12 | 0.0100 | 2.1 | 1.2 | 0.060 | 0.040 |
| 14 | 4.0 | 2.4 | 0.56 | 0.05 | 0.0070 | 2.0 | 1.1 | 0.020 | 0.007 |
| 15 | 5.0 | 3.0 | 0.51 | 0.06 | 0.0080 | 2.3 | 1.4 | 0.040 | 0.030 |
| 16 | 5.5 | 4.0 | 0.45 | 0.07 | 0.0050 | 2.4 | 1.5 | 0.080 | 0.040 |
| 17 | 5.6 | 3.6 | 0.45 | 0.08 | 0.0070 | 2.3 | 1.4 | 0.070 | 0.060 |
| 18 | 6.4 | 4.2 | 0.53 | 0.09 | 0.0060 | 2.3 | 1.5 | 0.060 | 0.040 |
| 19 | 5.6 | 3.5 | 0.53 | 0.06 | 0.0080 | 2.5 | 1.5 | 0.060 | 0.050 |
| 20 | 6.2 | 4.2 | 0.45 | 0.40 | 0.0070 | 2.2 | 1.1 | 0.060 | 0.050 |
| 21* | 6.3 | 4.0 | 0.40 | 0.05 | 0.0160 | 2.5 | 0,8‘ | 0.050 | 0.040 |
| 22 | 6.6 | 5:6 | 0.43 | 0.06 | O.DOBO | 2.3 | 0.8 | 0.040 | 0:040 |
| Comp. Examples | | | | | | | | | |
| 23 | 2.0 | 3.8 | 0.60 | 0.07 | 0.0070 | 2.2 | 1.1 | 0.040 | 0.060 |
| 24 | 11.0. | 3.6 | 0.40 | 0.07 | 0.0080 | 2.3 | 1.2 | 0.060 | 0.060 |
| 25 | 5.6 | 1.0 | 0.50 | 0.05 | 0.0070 | 2.4 | 1.1 | 0.040 | 0.040 |
| 26 | 6.2 | 8.5 | 0.30 | 0.10 | 0.0060 | 2.5 | 1.2 | 0.050 | 0.060 |
| 27 | 6.4 | 3.4 | 0.05 | 0.10 | 0.0080 | 3.0 | 1.2 | 0.080 | 0.030 |
| 28 | 6.7 | 3.2 | 0.90 | 0.20 | 0.0070 | 2.3 | 1.3 | 0.050 | 0.040 |
| 29 | 7.1 | 43 | 0.40 | 0.70 | 0.0070 | 2.3 | 1.2 | 0.040 | 0.020 |
| 30 | 6.2 | 4.5 | 0.50 | 0.10 | 0.0005 | 2.1 i | 1.0 | 0.060 | 0.040 |
| 31 | 8.1 | 3.5 | 0.30 | 0.04 | 0.0320 | 2.4 | 1.0 | 0.020 | 0.007 |
| 32 | 6.7 | 3.7 | 0.40 | 0.07 | 0.0060 | .0.8 | 1.0 | 0.040 | 0.030 |
| 33 | 6.4 | 4.8 | 0.34 | 0.05 | 0.0070 | 4.2 | 1.1 | 0.080 | 0.040 |
| 34 | 6.1 | 4.5 | 0.43 | 0.04 | 0.0070 | 2.3 | 0.4 | 0.070 | 0.060 |
| 35 | 5.9 | 3.9 | 0.43 | 0.06 | 0.0080 | 2.5 | 0.3 | 0.060 | 0.040 |
| 36 | 6.7 | 3.8 | 0.45 | 0.04 | 0.0070 | 2.3 | 0.2 | 0.060 | 0.060 |
| 37 | 6.7 | 3.7 | 0.35 | 0.07 | 0.0080 | 2.4 | 3.1 | 0.020 | 0.030 |
| 38 | 6.8 | 4.2 | 0.38 | 0.04 | 0.0070 | 2.5 | 1.0 | 0.520 | 0.030 |
| 39 | 6.3 | 4.1 | 0.37 | 0.05 | 0.0080 | 2.5 | 1.0 | 0.040 | 0.540 |
| 40 | 6.3 | 3.2 | 0.32 | 0.05 | 0.0030 | 2.2 | 2.6 | 0.060 | 0.040 |
| 41 | B.2 | 5.1 | 0.67 | 0.06 | 0.0160 | 2.2 | 0.6 | 0.060 | 0.030 |
| * : Example is outside the scope of the claims. | | | | | | | | | |

Table 2 shows the value of X in the formula 2, the whole water content and the individual properties of the test results..

Table 2

| No. | Value X | Whole water content | vE-40°C (J) | Dropping | Arc stability | Sputter |
|---|---|---|---|---|---|---|
| Inventive Examples | | | | | | |
| 1 | 1.69 | 300 | 80 | 5 | 4 | 5 |
| 2* | 0.82 | 250 | 98 | 3 | 5 | 5 |
| 3 | 2.43 | 300 | 86 | 4 | 5 | 5 |
| 4 | 1.65 | 400 | 84 | 5 | 4 | 4 |
| 5 | 2.31 | 350 | 93 | 5 | 5 | 3 |
| 6 | 1.55 | 50 | 94 | 5 | 3 | 4 |
| 7 | 1.25 | 100 | 100 | 5 | 5 | 5 |
| 8* | 0.91 | 100 | 92 | 5 | 5 | 5 |
| 9* | 0.59 | 300 | 86 | 4 | 4 | 5 |
| 10 | 1.14 | 200 | 75 | 5 | 4 | 4 |
| 11 | 1.65 | 200 | 78 | 5 | 5 | 5 |
| 12 | 1.85 | 200 | 83 | 4 | 5 | 5 |
| 13 | 1.89 | 300 | 100 | 5 | 4 | 5 |
| 14 | 1.57 | 500 | 95 | 5 | 5 | 4 |
| 15 | 1.36 | 100 | 96 | 5 | 5 | 5 |
| 16 | 1.14 | 110 | 79 | 4 | 5 | 5 |
| 17 | 1.34 | 320 | 81 | 5 | 4 | 5 |
| 18 | 1.25 | 350 | 93 | 5 | 5 | 4 |
| 19 | 1.36 | 340 | 89 | 5 | 4 | 5 |
| 20 | 1.73 | 1230 | 102 | 4 | 4 | 5 |
| 21* | 3.34 | 330 | 88 | 4 | 4 | 4 |
| 22 | 2.63 | 340 | 83 | 4 | 4 | 4 |
| Comp. Examples | | | | | | |
| 23 | 1.82 | 300 | 4B | 1 | 3 | 3 |
| 24 | 1.59 | 360 | 23 | 4 | 3 | 1 |
| 25 | 1.47 | 300 | 31 | 2 | 2 | 3 |
| 26 | 1.76 | 40 | 39 | 4 | 3 | 2 |
| 27 | 1.33 | 490 | 15 | 1 | 3 | 3 |
| 28 | 1.72 | 380 | 63 | 4 | 1 | 1 |
| 29 | 1.52 | 300 | 11 | 3 | 3 | 3 |
| 30 | 1.31 | 400 | 10 | 3 | 4 | 4 |
| 31 | 4.12 | 320 | 32 | 2 | 2 | 2 |
| 32 | 1.52 | 340 | 11 | 3 | 3 | 3 |
| 33 | 1.87 | 400 | 23 | 2 | 2 | 2 |
| 34 | 4.85 | 310 | 21 | 1 | 2 | 2 |
| 35 | 6.57 | 320 | 35 | 1 | 2 | 2 |
| 36 | 9.40 | 340 | 18 | 1 | 1 | 2 |
| 37 | 0.58 | 390 | 13 | 4 | 3 | 3 |
| 3B | 2.30 | 200 | 40 | 1 | 3 | 3 |
| 39 | 2.41 | 320 | 32 | 1 | 3 | 3 |
| 40 | 0.48 | 300 | 24 | 2 | 2 | 2 |
| 41 | 5.15 | 300 | 21 | 2 | 2 | 2 |

* : Example is outside the scope of the claims.

In Table 2, the assessment standards are as follows; 1; bad, 2; poor, 3; normal; good, and 5; great. As apparently -shown in the Table 2, all the Examples of the present invention have great toughness [Charpy absorption energy (vE-40°C (J))] and have acquired good assessment from the respect of dropping, arc stability and sputter. Thus, these Examples are very great. On the contrary, the Comparative Examples are generally poor in these assessment; Comparative Example 26 in particular has too high strength; Comparative Example 29 has poor appearance and shape; Comparative Example 31 generates crack; Comparative Example 32 cannot get enough strength; and Comparative Example 33 generates crack.

As has been explained above, in accordance with the present invention, highly efficient welding process can be carried out for all position welding, particularly vertical and overhead position welding. The toughness thereof down to about -40 °C is great. Thus, the invention is very useful as a flux cored wire electrode for such type of arc welding.

## Claims

1. A flux cored wire electrode for arc welding, comprising a flux filled in the steel housing, wherein the contents of $TiO_2$, Ti, Mg, Al, B, Mn, Si, K, and Na are at least 3.0 to 10.0 % by weight, 2 to 8 % by weight, 0.1 to 0.8 % by weight, ≤ 0.5 % by weight, 0.001 to 0.03 % by weight, 1.0 to 4.0 % by weight, 0.5 to 3.0 % by weight, 0.001 to 0.5 % by weight and 0.001 to 0.5 % by weight, respectively, to the total weight of the wire electrode, wherein Mg, B, Ti, Mn, K, Na, and Si., contained in the wire electrode, satisfy the formula:

$$1.0 \leq (Mg + 100 \times B + 0.1 \times Ti + 0.1 \times Mn + K + Na)/Si \leq 3.0,$$

the contents of Ti, Mg, Al, B, Mn, Si, K, and Na being expressed as total element included in the corresponding metal, alloy and compounds.

2. A flux cored wire electrode for arc welding according.to claim 1, wherein the whole water content is defined within a range of 20 to 1,000 ppm (measured at 750°C in $O_2$ atmosphere by KF method) as the ratio to the total wire electrode weight.

## Patentansprüche

1. Flussmittelkernhaltige Drahtelektrode zum Lichtbogenschweißen, mit einem in das Stahlgehäuse eingefüllten Flussmittel, wobei der Gehalt an $TiO_2$, Ti, Mg, Al, B, Mn, Si, K und Na bezogen auf das Gesamtgewicht der Drahtelektrode zumindest 3,0 bis 10,0 Gew.-%, 2 bis 8 Gew.-%, 0,1 bis 0,8 Gew-%, 5 0,5 Gew.-%, 0,001 bis 0,03 Gew.-%, 1,0 bis 4,0 Gew.-%, 0,5 bis 3,0 Gew.-%, 0,001 bis 0,5 Gew.-% beziehungsweise 0,001 bis 0,5 Gew.-% beträgt, wobei Mg, B, Ti, Mn, K, Na und Si, die in der Drahtelektrode enthalten sind, die Formel erfüllen:

$$1{,}0 \leq (Mg + 100 \times B + 0{,}1 \times Ti + 0{,}1 \times Mn + K + Na)/Si \leq 3{,}0,$$

wobei der Gehalt an Ti, Mg, Al, B, Mn, Si, K und Na als das in dem entsprechenden Metall, der entsprechenden Legierung und den entsprechenden Verbindungen enthaltene gesamte Element ausgedrückt ist.

2. Flussmittelkernhaltige Drahtelektrode zum Lichtbogenschweißen nach Anspruch 1, wobei der Gesamtwassergehalt als das Verhältnis zu dem gesamten Drahtelektrodengewicht innerhalb eines Bereichs von 20 bis 1.000 ppm definiert ist (mit KF-Verfahren bei 750°C in $O_2$-Atmosphäre gemessen).

## Revendications

1. Fil électrode à âme de flux pour soudage à l'arc, comprenant un flux remplissant l'enrobage d'acier, dans lequel les teneurs en $TiO_2$, Ti, Mg, Al, B, Mn, Si, K et Na sont au moins de 3,0 à 10,0 % en poids, 2 à 8 % en poids, 0,1 à 0,8 % en poids, ≤ 0,5 % en poids, 0,001 à 0,03 % en poids, 1,0 à 4 % en poids, 0,5 à 3,0 % en poids, 0,001 à 0,5 % en poids, et 0,001 à 0,5 % en poids, respectivement, par rapport au poids total du fil électrode, dans lequel Mg, B, Ti, Mn, K, Na et Si contenus dans le fil électrode satisfont la formule,

$$1{,}0 \leq (Mg + 100 \times B + 0{,}1 \times Ti + 0{,}1 \times Mn + K + Na) / Si \leq 3{,}0,$$

les teneurs en Ti, Mg, Al, B, Mn, Si, K et Na étant exprimées sous forme de l'élément inclus au total dans le métal, l'alliage et les composés correspondants.

2. Fil électrode à flux incorporé pour soudage à l'arc selon la revendication 1, dans laquelle la teneur totale en eau est définie à l'intérieur d'une plage de 20 à 1 000 ppm (mesurée à 750 °C, dans une atmosphère de $0_2$ par la méthode KF) en tant que rapport sur le poids total du fil électrode.

Fig. 1

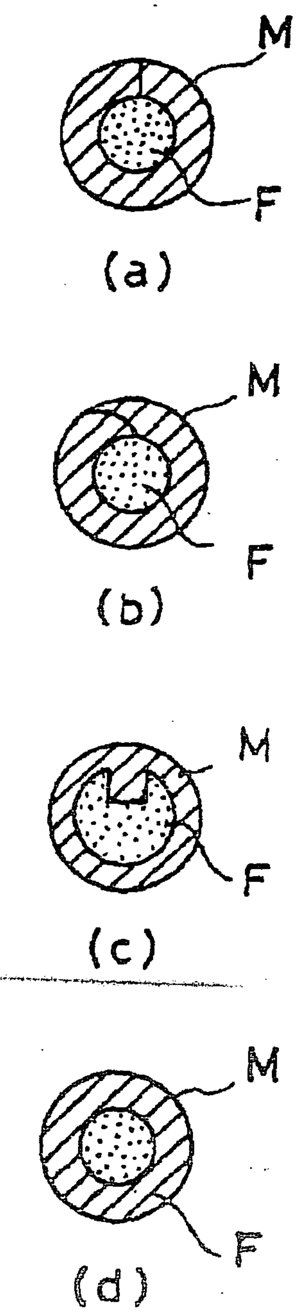

Fig. 2

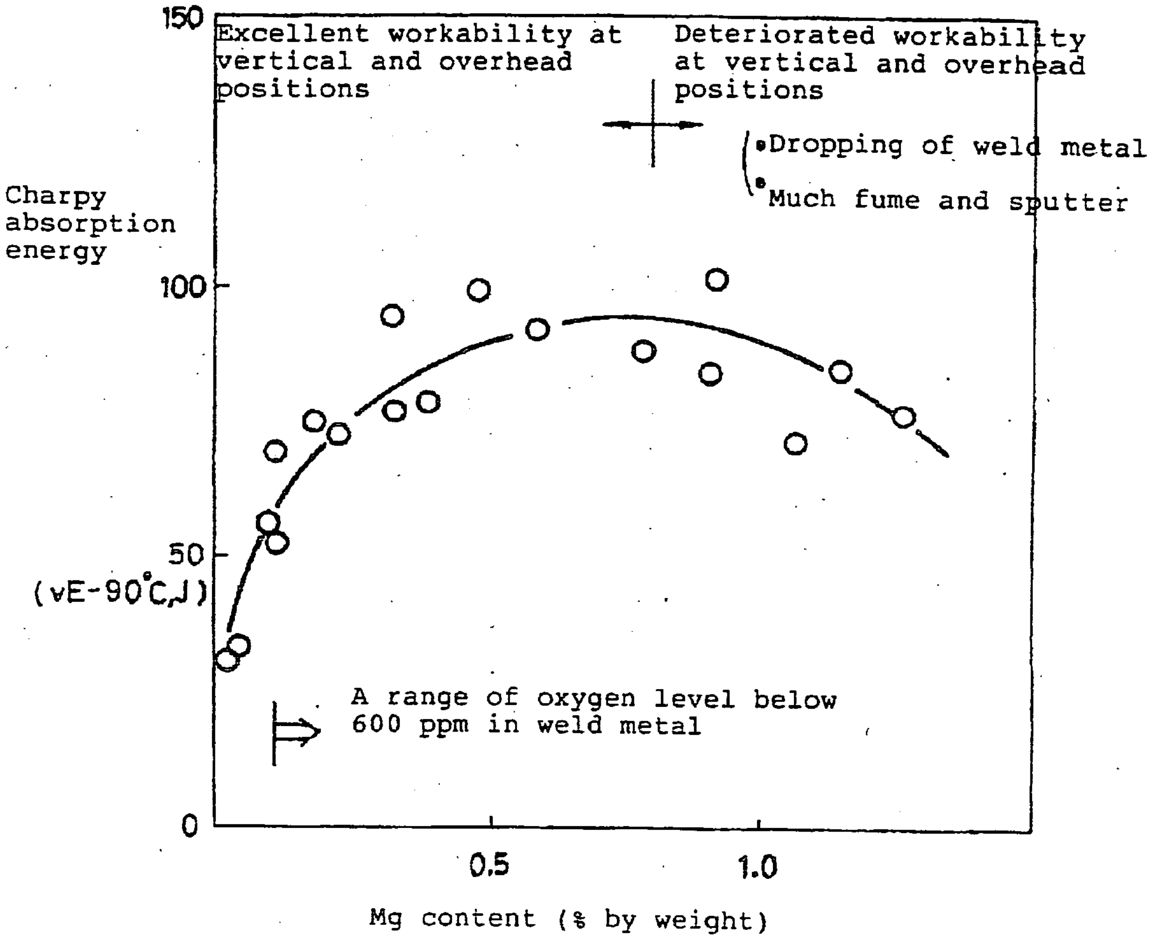

150
100
50
0
Charpy absorption energy
(vE-90°C,J)
Excellent workability at vertical and overhead positions
Deteriorated workability at vertical and overhead positions
•Dropping of weld metal
•Much fume and sputter
A range of oxygen level below 600 ppm in weld metal
0.5
1.0
Mg content (% by weight)

Fig. 3

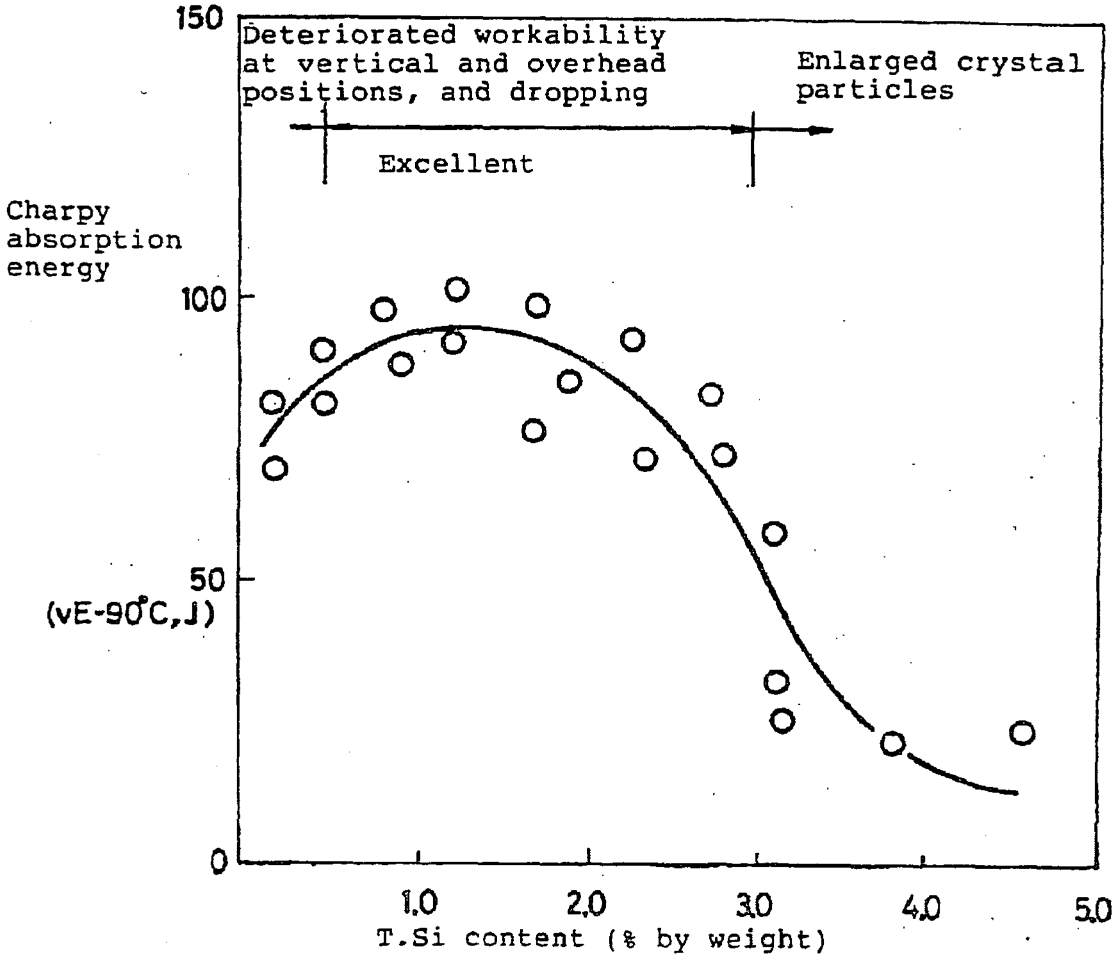
150
100
50
0
Charpy
absorption
energy
(vE-90°C,J)
Deteriorated workability
at vertical and overhead
positions, and dropping
Enlarged crystal
particles
Excellent
1.0
2.0
3.0
4.0
5.0
T.Si content (% by weight)

Fig. 4

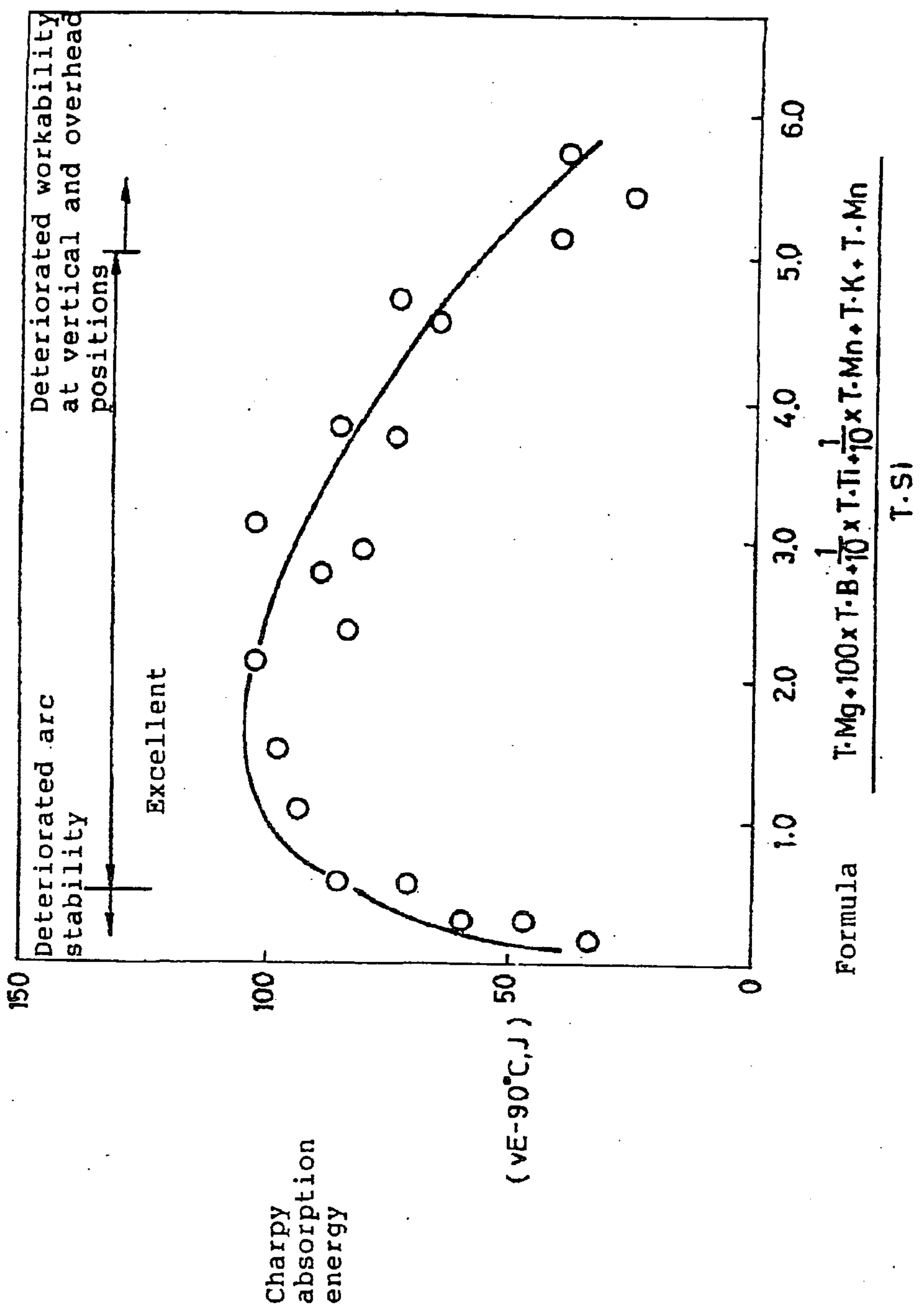
Deteriorated arc stability
Excellent
Deteriorated workability at vertical and overhead positions
Charpy absorption energy
(vE-90°C,J)
150
100
50
0
1.0
2.0
3.0
4.0
5.0
6.0
Formula
T·Mg+100xT·B+1/10xT·Ti+1/10xT·Mn+T·K+T·Mn
T·Si